# FASCICULE DE BREVET EUROPEEN

(11) **EP 4 023 041 B1**
(45) Date de publication et mention de la délivrance du brevet: **04.10.2023**
(21) Numéro de dépôt: 22150066.3
(22) Date de dépôt: 03.01.2022
(51) Int. Cl.: A01B 39/16, A01B 63/02, A01B 49/02

(54) **SUPPORT D'OUTIL ÉQUIPÉ D'UN SYSTÈME D'ÉVITEMENT D'OBSTACLES COMBINANT UNE ARTICULATION À PARALLÉLOGRAMME DÉFORMABLE ET UNE ARTICULATION PIVOTANTE**
WERKZEUGTRÄGER MIT EINEM SYSTEM ZUM AUSWEICHEN VOR HINDERNISSEN, DER EIN VERFORMBARES PARALLELOGRAMMGELENK UND EIN DREHGELENK KOMBINIERT
SUPPORT FOR A TOOL PROVIDED WITH A SYSTEM FOR AVOIDING OBSTACLES COMBINING A HINGE WITH DEFORMABLE PARALLELOGRAM AND A PIVOTING JOINT

(30) Priorité: 05.01.2021 FR 2100067
(43) Date de publication de la demande: 06.07.2022
(73) Titulaire: Ferrand, 11620 Villmoustaussou (FR)
(72) Inventeur: TROUVEL, Serge, 11620 VILLEMOUSTAUSSOU (FR)
(74) Mandataire: Fantin, Laurent

(56) Documents cités:
- ES-U- 1 062 115
- SU-A1- 526 302
- US-A- 4 567 689

## Description

La présente demande se rapporte à un support d'outil équipé d'un système d'évitement d'obstacles combinant une articulation à parallélogramme déformable et une articulation pivotante.

Selon un premier mode de réalisation décrit dans le document FR-1.362.750 par exemple, un support d'outil comprend un parallélogramme déformable composé d'un châssis, de deux biellettes et d'une traverse. Le châssis est relié à un tracteur ou à tout autre engin motorisé et la traverse supporte un outil tel qu'un soc. Ce support d'outil comprend également un vérin reliant le support et l'une des biellettes pour déformer le parallélogramme, un palpeur configuré pour prendre appui contre des obstacles et pivoter ainsi qu'un capteur configuré pour détecter le pivotement du palpeur. Ainsi, lorsque le palpeur prend appui contre un obstacle, le capteur détecte son mouvement de pivotement et déclenche l'activation du vérin. Ce dernier déforme alors le parallélogramme de sorte que l'outil s'écarte du rang. Après le passage de l'obstacle, le capteur détecte le retour en position repos du palpeur et déclenche l'activation du vérin en sens inverse afin de déformer le parallélogramme pour rapprocher l'outil du rang.

Ce support d'outil intégrant un parallélogramme déformable permet de contrôler la position d'un outil par rapport aux obstacles disposés dans un rang en écartant l'outil du rang au passage de chaque obstacle. Il a pour avantage de conserver l'orientation de l'outil lors du passage des obstacles. Toutefois, il offre une course transversale (perpendiculaire au rang) réduite qui peut ne pas suffire si un obstacle est trop écarté par rapport au rang.

Selon un deuxième mode de réalisation, un support d'outil comprend une première partie configurée pour être reliée à un tracteur ou à tout autre engin motorisé, une deuxième partie supportant un outil ainsi qu'une articulation pivotante orientée verticalement reliant les première et deuxième parties. Comme précédemment, ce support d'outil comprend également un vérin pour provoquer le pivotement de la deuxième partie par rapport à la première partie selon l'axe de pivotement vertical de l'articulation pivotante, un palpeur configuré pour prendre appui contre des obstacles et pivoter ainsi qu'un capteur configuré pour détecter le pivotement du palpeur. Ainsi, lorsque le palpeur prend appui contre un obstacle, le capteur détecte son mouvement de pivotement et déclenche l'activation du vérin. Ce dernier provoque le pivotement de la deuxième partie par rapport à la première partie de sorte que l'outil s'écarte du rang. Après le passage de l'obstacle, le capteur détecte le retour en position repos du palpeur et déclenche l'activation du vérin en sens inverse.

Ce support d'outil permet de provoquer un écartement rapide de l'outil sur une grande course. Toutefois, contrairement à un support d'outil intégrant un parallélogramme déformable, il ne permet pas de conserver l'orientation de l'outil lors du passage des obstacles, ce qui peut nuire à la qualité du travail de l'outil.

Les documents SU 526 302 A1, ES 1 062 115 U et US 4 567 689 A décrivent d'autres supports d'outil connus.

La présente invention vise à remédier à tout ou partie des inconvénients de l'art antérieur combinant les avantages des premier et deuxième modes de réalisation de l'art antérieur.

A cet effet, l'invention a pour objet un support d'outil comportant une première partie configurée pour être reliée directement ou indirectement à un engin motorisé ainsi qu'une deuxième partie supportant un outil ; le support d'outil comprend une partie intermédiaire, une première articulation reliant la première partie et la partie intermédiaire, une deuxième articulation reliant la deuxième partie et la partie intermédiaire, l'une des première et deuxième articulations étant un parallélogramme déformable permettant à l'outil de se déplacer dans un plan de déplacement entre des positions engagée et dégagée et l'autre étant une liaison pivotante permettant à l'outil de pivoter autour d'un axe de pivotement entre des positions dégagée et pivotée, le support d'outil comprenant également au moins un actionneur pour déformer le parallélogramme déformable et/ou pour faire pivoter l'outil autour de l'axe de pivotement. En complément, le support d'outil comprend un unique actionneur reliant les première et deuxième parties qui présente une première plage de fonctionnement durant laquelle le parallélogramme déformable est déformé ainsi qu'une deuxième plage de fonctionnement durant laquelle l'outil pivote autour de l'axe de pivotement.

Ce support d'outil combine les avantages procurés par une articulation sous la forme d'un parallélogramme déformable et par une articulation sous la forme d'une liaison pivotante. Le fait de prévoir un unique actionneur pour contrôler les deux articulations permet d'obtenir un ensemble plus compact et de réduire les besoins en énergie.

Selon une autre caractéristique, le support d'outil comprend une première butée de blocage de la première articulation, dans un premier sens, configurée pour bloquer la déformation de la première articulation dans le premier sens, une première butée de blocage de la deuxième articulation, dans un premier sens, configurée pour bloquer la déformation de la deuxième articulation dans le premier sens, ainsi qu'un jeu de première et deuxième cames présentant des profils configurés pour :
- sur la première plage de fonctionnement de l'actionneur, bloquer la déformation de la deuxième articulation dans un deuxième sens opposé au premier sens, lorsque l'outil est dans une position entre les positions engagée et dégagée,
- sur la deuxième plage de fonctionnement de l'actionneur, bloquer la déformation de la première articulation dans un deuxième sens opposé au premier sens, lorsque l'outil est dans une position entre les positions dégagée et pivotée.

Le jeu de cames permet d'obtenir une meilleure coordination des articulations en étant certain que, sur la première plage de fonctionnement de l'actionneur, la première articulation est libre et la deuxième articulation est bloquée alors que sur la deuxième plage de fonctionnement de l'actionneur, la première articulation est bloquée et la deuxième articulation est libre.

D'autres caractéristiques et avantages ressortiront de la description de modes de réalisation de l'invention qui va suivre, description donnée à titre d'exemple uniquement, en regard des dessins annexés parmi lesquels :
- La figure 1 est une vue de dessus d'une machine agricole comportant au moins un support d'outil illustrant une configuration de l'invention,
- La figure 2 est une vue en perspective d'un support d'outil illustrant un mode de réalisation de l'invention,
- La figure 3 est une vue en perspective des différents éléments du support d'outil visible sur la figure 2,
- La figure 4 est une coupe selon le plan IV de la figure 2,
- La figure 5 est une vue de dessus d'un support d'outil illustrant un mode de réalisation de l'invention dans plusieurs positions : (A) dans une position engagée, (B) dans une position dégagée et (C) dans une position pivotée,
- La figure 6 est une vue de dessus illustrant en détails un jeu de cames du support d'outil visible sur la figure 5 lorsque ce dernier est : (A) dans la position engagée, (B) dans la position dégagée et (C) dans la position pivotée,
- La figure 7 est une vue en perspective des différents éléments d'un support d'outil illustrant un autre mode de réalisation,
- La figure 8 est une vue de dessus du support d'outil visible sur la figure 7 dans plusieurs positions : (A) dans une position engagée, (B) dans une position dégagée et (C) dans une position pivotée.

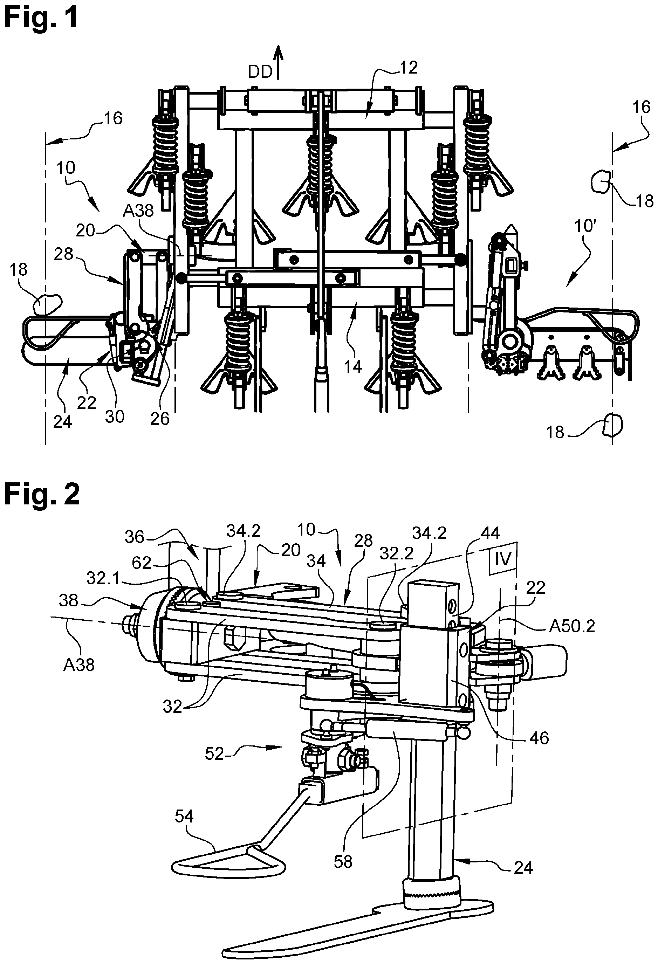

Sur la figure 1, on a représenté deux supports d'outil 10, 10' reliés à une machine agricole 12 tractée par un engin motorisé non représenté.

L'invention n'est pas limitée à cette configuration. Ainsi, un support d'outil 10 de l'invention peut être directement relié à un engin motorisé, comme un tracteur ou un enjambeur par exemple, ou par l'intermédiaire d'un châssis porteur 14 lui-même relié à un engin motorisé. En fonctionnement, le support d'outil 10 est destiné à se déplacer selon une direction de déplacement DD, approximativement parallèle à un rang 16 (matérialisé par un trait d'axe) en évitant des obstacles 18 positionnés le long du rang 16. Pour simplifier la représentation, le rang 16 est rectiligne. En réalité, il ne l'est généralement pas.

Pour la suite de la description, une direction transversale est une direction perpendiculaire au rang 16.

Comme illustré sur les différentes figures, le support d'outil 10 comprend une première partie 20 configurée pour être reliée directement ou indirectement à un engin motorisé, une deuxième partie 22 configurée pour supporter un outil 24, une partie intermédiaire 26, une première articulation 28 reliant la première partie 20 et la partie intermédiaire 26 ainsi qu'une deuxième articulation 30 reliant la deuxième partie 22 et la partie intermédiaire 26.

Selon un mode de réalisation, l'outil 24 est une lame pour gratter le sol. Bien entendu, l'invention n'est pas limitée à ce type d'outil. D'autres outils pourraient être fixés sur le support d'outil 10. Ainsi, un deuxième outil 24' peut être fixé sur la première partie 20.

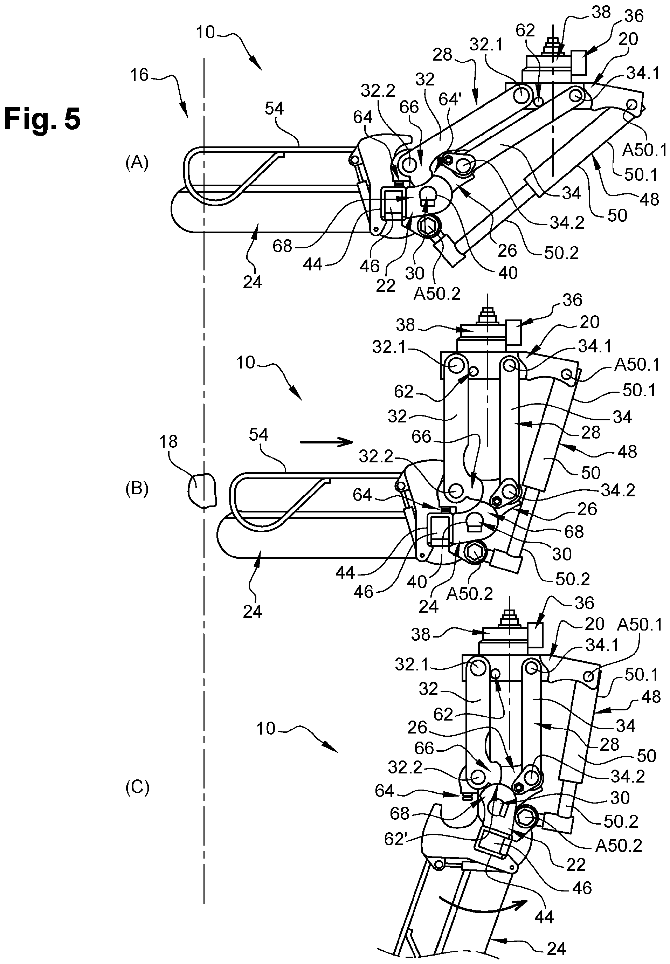

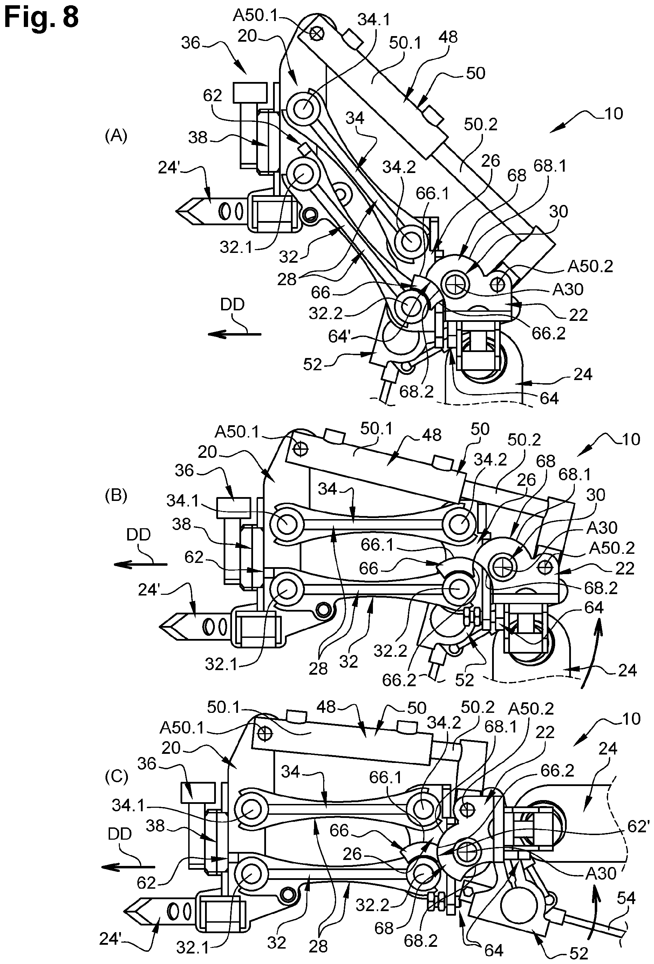

Grâce à cette double articulation, comme illustré sur les figures 5 et 8, l'outil 24 peut se déplacer selon une direction transversale entre une position engagée (A) et une position dégagée (B) afin d'éviter les obstacles 18 tout en conservant son orientation et/ou peut pivoter dans une position pivotée (C) lorsqu'un obstacle 18 est trop proche de la première partie 20 et ne peut pas être évité dans la position dégagée.

Selon une première configuration visible sur les différentes figures, la première articulation 28 est un parallélogramme déformable permettant à la partie intermédiaire 26 de se déplacer par rapport à la première partie 20 dans un plan de déplacement tout en conservant son orientation. En complément, la deuxième articulation 30 est une liaison pivotante permettant à la deuxième partie 22 de pivoter par rapport à la partie intermédiaire 26 autour d'un axe de pivotement A30 sensiblement perpendiculaire au plan de déplacement.

Selon une deuxième configuration, la première articulation 28 reliant la première partie 20 et la partie intermédiaire 26 est une liaison pivotante et la deuxième articulation 30 reliant la deuxième partie 22 et la partie intermédiaire 26 est un parallélogramme déformable.

Quelle que soit la configuration, le parallélogramme déformable permet à l'outil 24 de se déplacer dans un plan de déplacement entre des positions engagée et dégagée et la liaison pivotante permet à l'outil 24 de pivoter autour de l'axe de pivotement A30 entre des positions dégagée et pivotée.

Le plan de déplacement est sensiblement parallèle au sol. Par conséquent lorsque le sol est approximativement horizontal, le plan de déplacement est sensiblement horizontal et l'axe de pivotement A30 est sensiblement vertical.

Selon un mode de réalisation, la première articulation 28 comprend des première et deuxième biellettes 32, 34 sensiblement parallèles qui relient la partie intermédiaire 26 et la première ou deuxième partie 20, 22. Selon la première configuration, les première et deuxième biellettes 32, 34 relient la première partie 20 et la partie intermédiaire 26. La première biellette 32 est reliée à la première partie 20 par un axe de pivotement 32.1 et à la partie intermédiaire 26 par un axe de pivotement 32.2. La deuxième biellette 34 est reliée à la première partie 20 par un axe de pivotement 34.1 et à la partie intermédiaire 26 par un axe de pivotement 34.2. Selon une configuration, la première partie 20 est orientée de manière à ce que les axes de pivotement 32.1 et 34.1 soient alignés selon une droite approximativement perpendiculaire à la direction de déplacement DD. Tous les axes de pivotement 32.1, 32.2, 34.1, 34.2 sont orientés perpendiculairement au plan de déplacement et approximativement parallèles à l'axe de pivotement A30 de la deuxième articulation 30.

L'articulation, sous la forme d'un parallélogramme déformable, et plus particulièrement les biellettes 32 et 34, sont dimensionnées et configurées pour permettre à l'outil 24 de se déplacer entre les positions engagée et dégagée souhaitées.

Selon une configuration visible sur les figures 5(B) et 8(B), les première et deuxième biellettes 32, 34 sont approximativement parallèles à la direction de déplacement DD lorsque l'outil 24 est dans la position dégagée.

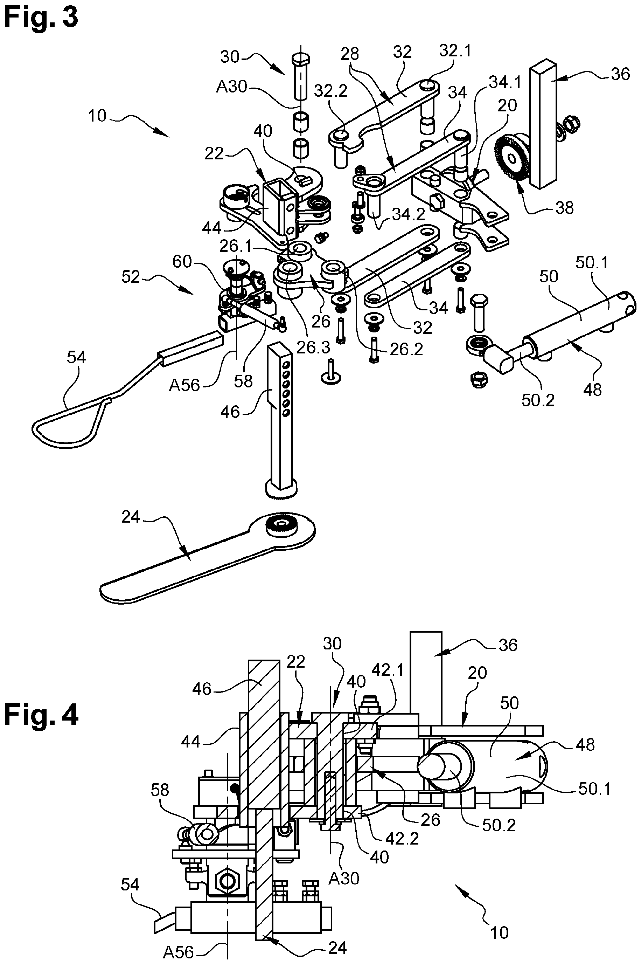

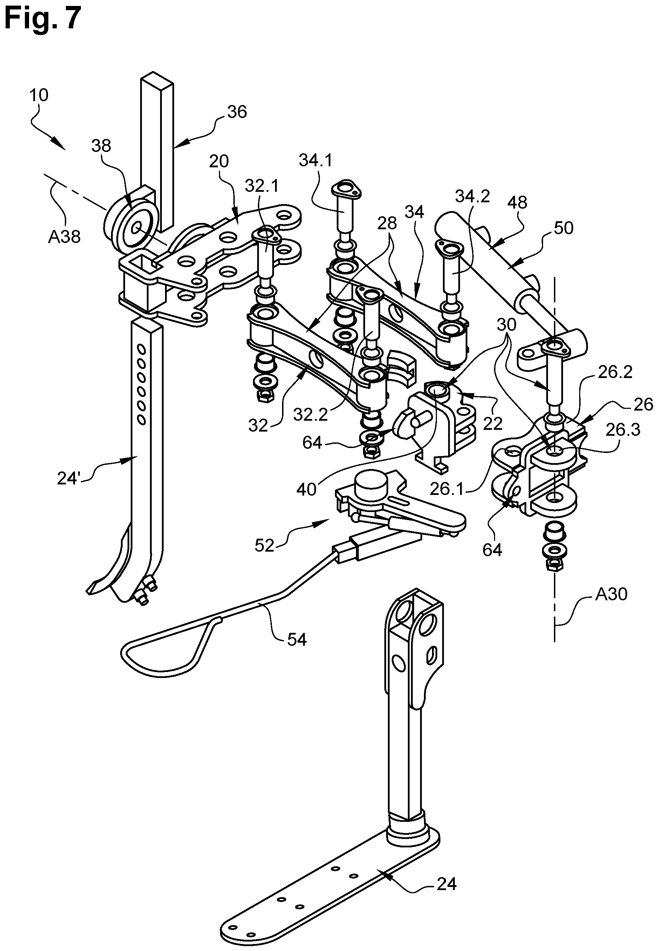

Selon un mode de réalisation visible sur les figures 2 à 6, la première articulation 28 comprend un couple de premières biellettes 32 disposées au-dessus et au-dessous de la première partie 20 et de la partie intermédiaire 26 ainsi qu'un couple de deuxièmes biellettes 34 disposées au-dessus et au-dessous de la première partie 20 et de la partie intermédiaire 26. Bien entendu, l'invention n'est pas limitée à ce mode de réalisation. Ainsi, comme illustré sur les figures 7 et 8, la première articulation 28 comprend une seule première biellette 32 et une seul deuxième biellette 34.

Selon un mode de réalisation, la première partie 20 comprend un système de fixation 36 pour la relier à un engin motorisé. A titre d'exemple, ce système de fixation comprend un montant configuré pour se loger dans un manchon solidaire de l'engin motorisé ou de la machine agricole. Bien entendu, l'invention n'est pas limitée à ce mode de réalisation pour le système de fixation 36. D'autres solutions sont envisageables.

Selon une configuration, la première partie 20 comprend un système de réglage 38 de l'inclinaison de l'outil 24, notamment autour d'un axe de pivotement A38 perpendiculaire à la direction de déplacement DD et à l'axe de pivotement A30. Selon d'autres configurations, le support d'outil peut ne pas comprendre de système de réglage 38 de l'inclinaison de l'outil 24.

Selon un mode de réalisation, la partie intermédiaire 26 a une forme triangulaire et comprend trois alésages, un premier alésage 26.1 prévu pour loger l'axe de pivotement 32.2 de la première biellette 32 (ou du couple de premières biellettes 32) et former une liaison pivotante, un deuxième alésage 26.2 prévu pour loger l'axe de pivotement 34.2 de la deuxième biellette 34 (ou du couple de deuxièmes biellettes 34) et former une liaison pivotante ainsi qu'un troisième alésage 26.3 prévu pour loger l'axe de pivotement A30 et former une liaison pivotante. Les trois alésages 26.1, 26.2, 26.3 sont orientés de manière à être parallèles entre eux.

Selon un mode de réalisation, la deuxième partie 22 comprend au moins un alésage 40 pour loger l'axe de pivotement A30 et former une liaison pivotante. Selon une configuration, la deuxième partie 22 comprend une chape comportant deux branches 42.1, 42.2, disposées au-dessus et au-dessous de la partie intermédiaire 26, comportant chacune un alésage 40 pour loger l'axe de pivotement A30.

La deuxième partie 22 comprend également un système de fixation de l'outil 24. Selon un mode de réalisation, la deuxième partie 22 comprend un manchon 44 orienté parallèlement à l'axe de pivotement A30 et configuré pour loger un montant 46 solidaire de l'outil 24. Selon une configuration, le système de fixation de l'outil 24 permet un réglage en hauteur. Bien entendu, l'invention n'est pas limitée à ce mode de réalisation et en couvre toutes les variantes.

Le support d'outil 10 comprend au moins un actionneur 48 permettant de contrôler la première articulation 28 et/ou la deuxième articulation 30. Selon une configuration, le support d'outil 10 comprend un unique actionneur 48 pour contrôler les deux articulations 28, 30, notamment la déformation du parallélogramme et le pivotement autour de l'axe de pivotement A30. Selon une autre configuration, le support d'outil 10 comprend deux actionneurs, un pour chacune des première et deuxième articulations 28, 30.

Selon un mode de réalisation, l'actionneur 48 est un vérin 50 reliant les première et deuxième parties 20, 22 qui présente un corps 50.1 ainsi qu'une tige 50.2 mobile par rapport au corps 50.1 entre une position sortie, visible sur les figures 5(A) et 8(A), une position rentrée, visible sur les figures 5(C) et 8(C) ainsi que des positions intermédiaires dont une est visible sur les figures 5(B) et 8(B). A titre d'exemple, le corps 50.1 est relié à la première partie 20 par une liaison pivotante A50.1 orientée parallèlement à l'axe de pivotement A30 et la tige 50.2 est reliée à la deuxième partie 22 par une liaison pivotante A50.2 orientée parallèlement à l'axe de pivotement A30.

Le fait de prévoir un seul actionneur 48 permet de réduire les coûts et de limiter les encombrements.

Le support d'outil 10 comprend également un système de pilotage 52 pour contrôler l'actionneur 48. Selon un mode de réalisation, le système de pilotage 52 comprend :
- une platine,
- un palpeur 54 configuré pour prendre appui contre des obstacles 18,
- une liaison pivotante A56, reliant le palpeur 54 et la platine, configurée pour permettre au palpeur 54 de pivoter par rapport à la platine selon un axe de rotation parallèle à l'axe de pivotement A30 entre une position repos en l'absence de contact avec un obstacle 18 et une position activée au contact d'un obstacle 18,
- un moyen de rappel 58 pour maintenir le palpeur 54 dans la position repos,
- un capteur 60 pour déterminer la valeur du pivotement du palpeur 54,
- un contrôleur pour contrôler le mouvement de l'actionneur 48 en fonction de la valeur déterminée par le capteur 60.

Bien entendu, l'invention n'est pas limitée à ce mode de réalisation pour le système de pilotage 52 et en couvre toutes les variantes. Ainsi, l'invention pourrait ne pas comprendre un palpeur mais tout autre capteur pour déterminer la position de chaque obstacle.

Selon une particularité de l'invention, l'actionneur 48 comprend une course de fonctionnement partant d'un premier état correspondant à la position engagée de l'outil 24 jusqu'à un deuxième état correspondant à la position pivotée de l'outil 24 et composée d'une première plage de fonctionnement allant du premier état jusqu'à un état intermédiaire correspondant à la position dégagée de l'outil 24 ainsi que d'une seconde plage de fonctionnement allant de l'état intermédiaire au deuxième état.

Lorsque l'actionneur 48 est un vérin 50, ce dernier présente une course entre les positions sortie et rentrée qui comprend une première plage de fonctionnement sur laquelle le vérin 50 provoque la déformation du parallélogramme déformable et le passage de la position engagée à la position dégagée ou inversement ainsi qu'une deuxième plage de fonctionnement sur laquelle le vérin 50 provoque le pivotement autour de l'axe de pivotement A30 et le passage de la position dégagée à la position pivotée ou inversement. Selon une configuration, lorsque le vérin 50 est en position sortie, l'outil 24 est dans la position engagée, comme illustré sur la figure 5(A) ; lorsque le vérin 50 est dans une position intermédiaire, l'outil 24 est dans la position dégagée, comme illustré sur la figure 5(B) ; lorsque le vérin 50 est dans la position rentrée, l'outil 24 est dans la position pivotée, comme illustré sur la figure 5(C).

Selon une caractéristique de l'invention, lorsque le support d'outil 10 comprend un actionneur 48 permettant de contrôler le pivotement autour de l'axe de pivotement A30 et la déformation du parallélogramme déformable, le support d'outil 10 comprend au moins une butée de blocage de la première articulation 62 configurée pour bloquer la première articulation 28 sur une deuxième plage de fonctionnement de l'actionneur 48 ainsi qu'au moins une butée de blocage de la deuxième articulation 64 configurée pour bloquer la deuxième articulation 30 sur une première plage de fonctionnement de l'actionneur 48. Selon une configuration, la (ou les) butée(s) de blocage de la première articulation 62 est (ou sont) configurée(s) pour empêcher toute déformation du parallélogramme déformable et permet(tent) de conserver la partie intermédiaire 26 immobile par rapport à la première partie 20 sur une plage de fonctionnement allant de l'état intermédiaire correspondant à la position dégagée de l'outil 24, visible sur les figures 5(B) et 8(B), jusqu'au deuxième état correspondant à la position pivotée de l'outil 24, visible sur les figures 5(C) et 8(C). La (ou les) butée(s) de blocage de la deuxième articulation 64 est (ou sont) configurée(s) pour bloquer la rotation de la deuxième partie 22 par rapport à la partie intermédiaire 26 autour de l'axe de pivotement A30 sur la première plage de fonctionnement allant du premier état correspondant à la position engagée, visible sur les figures 5(A) et 8(A), jusqu'à l'état intermédiaire correspondant à la position dégagée, visible sur les figures 5(B) et 8(B).

Selon un mode de réalisation visible sur les figures 2 et 5, le support d'outil 10 comprend une première butée de blocage de la première articulation 62, dans un premier sens, solidaire de la première partie 20 ou de la partie intermédiaire 26, configurée pour empêcher la déformation de la première articulation 28 dans le premier sens, et plus particulièrement la rotation de la (ou des) première et/ou deuxième biellette(s) 32, 34 dans le premier sens. La première butée de blocage de la première articulation 62 comprend une forme en saillie solidaire de la première partie 20, positionnée entre les première et deuxième biellettes 32, 34 de manière à ce que la première biellette 32 soit en contact contre la butée de blocage de la première articulation 62 lorsque l'outil 24 est dans la position dégagée et que les première et deuxièmes biellettes 32, 34 soient sensiblement parallèles à la direction de déplacement DD. Selon un autre mode de réalisation visible sur la figure 8, la première butée de blocage de la première articulation 62 est une excroissance prévue au niveau de la première biellette 32 apte à prendre appui contre la première partie 20 lorsque l'outil 24 est dans la position dégagée et que les première et deuxièmes biellettes 32, 34 soient sensiblement parallèles à la direction de déplacement DD, comme illustré sur la figure 8(B).

Selon une configuration, le support d'outil 10 comprend une première butée de blocage de la deuxième articulation 64 dans un premier sens de rotation configurée pour empêcher un pivotement de l'outil 24 autour de l'axe de pivotement A30 dans le premier sens.

Selon un mode de réalisation, la première butée de blocage de la deuxième articulation 64 est solidaire de la partie intermédiaire 26. Elle est positionnée et dimensionnée de sorte que la première butée de blocage de la deuxième articulation 64 soit en contact avec la deuxième partie 22, plus particulièrement avec le manchon 44, sur la première plage de fonctionnement de l'actionneur 48 lorsque l'outil 24 est dans une position entre les positions engagée et dégagée.

Selon un mode de réalisation visible sur les figures 5, 6 et 8, le support d'outil 10 comprend un jeu de cames 66, 68, une première came 66 solidaire d'une des première et deuxième biellettes 32, 34 du parallélogramme déformable et une deuxième came 68 solidaire de la deuxième partie 22, les première et deuxième cames 66, 68 ayant des profils configurés pour :
- sur la première plage de fonctionnement de l'actionneur 48, immobiliser en rotation dans un deuxième sens (opposé au premier sens) la deuxième partie 22 par rapport à la partie intermédiaire 26, tout en permettant la déformation du parallélogramme déformable, lorsque l'outil 24 est dans une position entre les positions engagée et dégagée,
- sur la deuxième plage de fonctionnement de l'actionneur 48, empêcher la déformation du parallélogramme déformable, tout en permettant la rotation de la deuxième partie 22 par rapport à la partie intermédiaire 26, autour de l'axe de pivotement A30, lorsque l'outil 24 est dans une position entre les positions dégagée et pivotée.

La première came 66 comprend un chant comportant un premier tronçon convexe 66.1, en arc de cercle, centré sur l'axe de pivotement 32.2, 34.2 d'une des première et deuxième biellettes 32, 34 ainsi qu'un deuxième tronçon 66.2 concave, en arc de cercle, centré sur l'axe de pivotement A30 lorsque l'outil 24 est dans une position entre les positions dégagée et pivotée. En complément, la deuxième came 68 comprend un chant comportant un premier tronçon 68.1 convexe, en arc de cercle, centré sur l'axe de pivotement A30, coulissant contre le deuxième tronçon 66.2 concave de la première biellette 66 sur la deuxième plage de fonctionnement de l'actionneur 48, lorsque l'outil 24 est dans une position entre les positions dégagée et pivotée ainsi qu'un deuxième tronçon 68.2 concave, en arc de cercle, centré sur l'axe de pivotement 32.2, 34.2 d'une des première et deuxième biellettes 32, 34, coulissant contre le premier tronçon convexe de la première biellette 66 sur la première plage de fonctionnement de l'actionneur 48, lorsque l'outil 24 est dans une position entre les positions engagée et dégagée.

Ainsi, le premier tronçon convexe 66.1 de la première came 66 et le deuxième tronçon 68.2 concave de la deuxième came 68 forment une deuxième butée de blocage de la deuxième articulation 64' dans un deuxième sens de rotation (opposé au premier sens) sur la première plage de fonctionnement de l'actionneur 48. En complément, le deuxième tronçon concave 66.2 de la première came 66 et le premier tronçon 68.1 convexe de la deuxième came 68 forment une deuxième butée de blocage de la première articulation 62' dans un deuxième sens (opposé au premier sens) sur la deuxième plage de fonctionnement de l'actionneur 48. Bien entendu, l'invention n'est pas limitée à ce mode de réalisation. Ainsi, le support d'outil pourrait comprendre des deuxièmes butées de blocage des première et deuxième articulations 62', 64' distinctes. Le fait qu'un jeu de cames 66, 68 assure cette double fonction permet d'obtenir une meilleure coordination des articulations 28, 30 en étant certain que, sur la première plage de fonctionnement de l'actionneur 48, la première articulation 28 soit libre et la deuxième articulation 30 soit bloquée alors que sur la deuxième plage de fonctionnement de l'actionneur 48, la première articulation 28 soit bloquée et la deuxième articulation 30 soit libre.

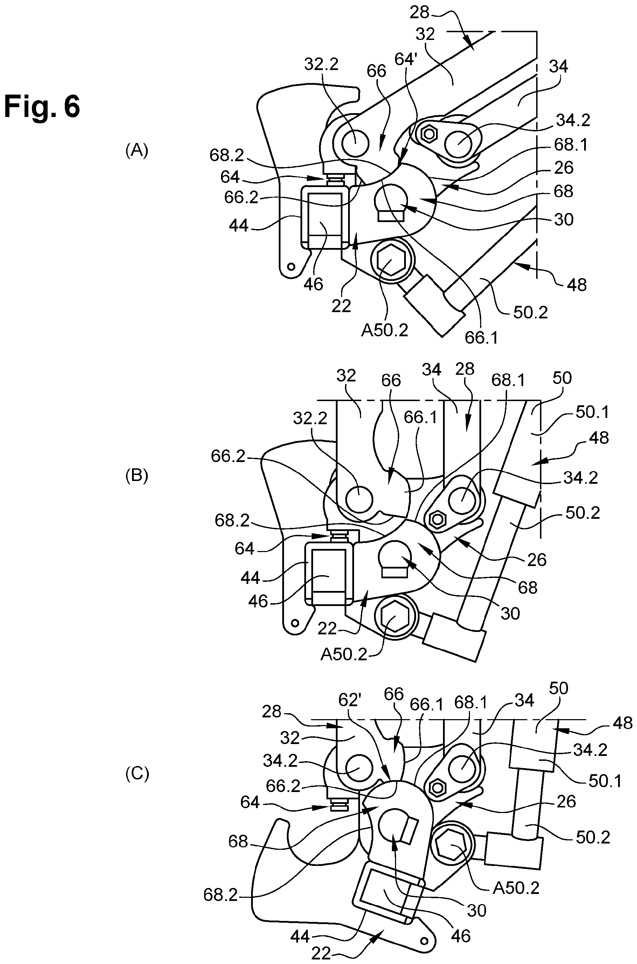

Le principe de fonctionnement du support d'outil 10 est maintenant décrit au regard des figures 5 et 6.

En l'absence d'obstacle, le vérin 50 est en position sortie et l'outil 24 est dans la position engagée, comme visible sur la figure 5(A). Comme illustré sur la figure 6(A), la première butée de blocage de la deuxième articulation 64 est en contact avec le manchon 44 de la deuxième partie 22. Le premier tronçon convexe 66.1 de la première came 66 coopère avec le deuxième tronçon 68.2 concave de la deuxième came 68.

Lorsqu'un obstacle 18 est détecté, le vérin 50 est actionné sur une longueur donnée en fonction de la position de l'obstacle 18 par rapport au support d'outil 10.

Si l'obstacle 18 est positionné au niveau du rang 16, le vérin 50 est actionné dans sa première plage de fonctionnement. Sa tige 50.2 est translatée vers la position rentrée avec une valeur fonction de la position de l'obstacle 18 comprise dans la première plage de fonctionnement. Dans ce cas, comme illustré sur la figure 6(A), le premier tronçon convexe 66.1 de la première came 66 coopérant avec le deuxième tronçon 68.2 concave de la deuxième came 68, la deuxième partie 22 est immobilisée en rotation dans le deuxième sens par rapport à la partie intermédiaire 26. La première biellette 32 peut toutefois pivoter par rapport à la partie intermédiaire 26 permettant au parallélogramme de se déformer. Par conséquent, le mouvement de rétractation de la tige 50.2 provoque la déformation du parallélogramme et la translation de l'outil 24 parallèlement à la direction transversale en direction de la position dégagée, comme illustré sur la figure 5 (B).

Après le passage de l'obstacle, la tige 50.2 du vérin 50 revient dans la position sortie. La première butée de blocage de la deuxième articulation 64 étant en contact avec la deuxième partie 22, cette dernière est immobilisée en rotation par rapport à la partie intermédiaire 26. Par conséquent, le mouvement de sortie de la tige 50.2 provoque la déformation du parallélogramme et la translation de l'outil 24 parallèlement à la direction transversale jusqu'à la position engagée, comme illustré sur la figure 5(A).

Si l'obstacle 18 est trop décalé par rapport au rang 16, le vérin 50 est actionné dans la première plage de fonctionnement puis dans la deuxième plage de fonctionnement. Sa tige 50.2 est translatée vers la position rentrée avec une valeur fonction de la position de l'obstacle 18 comprise dans la deuxième plage de fonctionnement.

Comme précédemment, dans un premier temps, tant que le vérin 50 fonctionne dans la première plage, l'outil 24 se déplace jusqu'à la position dégagée, comme décrit précédemment. Dans cette position, la première biellette 32 est en contact avec la première butée de blocage de la première articulation 62, comme illustré sur la figure 5(B), rendant dès lors la déformation du parallélogramme impossible. En parallèle, comme visible sur la figure 6(B), le premier tronçon convexe 66.1 de la première came 66 ne coopère plus avec le deuxième tronçon 68.2 concave de la deuxième came 68 si bien que la deuxième partie 22 n'est plus immobilisée en rotation dans le deuxième sens par rapport à la partie intermédiaire 26. Par conséquent, la rétractation de la tige 50.2 du vérin 50 sur la deuxième plage de fonctionnement provoque la rotation de la deuxième partie 22 autour de l'axe de pivotement A30 par rapport à la partie intermédiaire 26 et donc le pivotement de l'outil 24, comme illustré sur les figures 5(C) et 6(C). Sur cette deuxième plage de fonctionnement, le deuxième tronçon concave 66.2 de la première came 66 coopère avec le premier tronçon 68.1 convexe de la deuxième came 68.

Après le passage de l'obstacle, la tige 50.2 du vérin 50 se translate vers la position sortie. Tant que le vérin 50 fonctionne sur la deuxième plage, le deuxième tronçon concave 66.2 de la première came 66 coopère avec le premier tronçon 68.1 convexe de la deuxième came 68 et empêche la déformation du parallélogramme déformable. Par conséquent, la sortie de la tige 50.2 du vérin vers la position sortie provoque sur la deuxième plage de fonctionnement, le pivotement de la deuxième partie 22 par rapport à la partie intermédiaire 26 autour de l'axe de pivotement A30 et le passage de l'outil de la position pivotée vers la position dégagée, comme illustré sur les figures 5(B) et 6(B).

Lorsque l'outil 24 atteint la position dégagée, le deuxième tronçon concave 66.2 de la première came 66 ne coopère plus avec le premier tronçon 68.1 convexe de la deuxième came 68 rendant possible la déformation du parallélogramme déformable. Comme illustré sur la figure 6(A), le premier tronçon convexe 66.1 de la première came 66 coopérant avec le deuxième tronçon 68.2 concave de la deuxième came 68, la deuxième partie 22 est immobilisée en rotation dans le deuxième sens par rapport à la partie intermédiaire 26. Par conséquent, le mouvement de sortie de la tige 50.2 provoque la déformation du parallélogramme et la translation de l'outil 24 parallèlement à la direction transversale jusqu'à la position engagée, comme illustré sur la figure 5(A).

Ainsi, le support d'outil 10 de l'invention permet de combiner les avantages des premier et deuxième modes de réalisation de l'art antérieur.

## Revendications

1. Support d'outil (10) comportant une première partie (20) configurée pour être reliée directement ou indirectement à un engin motorisé, une deuxième partie (22) supportant un outil (24), le support d'outil (10) comprend une partie intermédiaire (26), une première articulation (28) reliant la première partie (20) et la partie intermédiaire (26), une deuxième articulation (30) reliant la deuxième partie (22) et la partie intermédiaire (26), l'une des première et deuxième articulations (28, 30) étant un parallélogramme déformable permettant à l'outil (24) de se déplacer dans un plan de déplacement parallèle au sol entre des positions engagée et dégagée et l'autre étant une liaison pivotante permettant à l'outil (24) de pivoter autour d'un axe de pivotement (A30) perpendiculaire au plan de déplacement entre des positions dégagée et pivotée, le support d'outil (10) comprenant un unique actionneur (48)
**caractérisé en ce que** ledit unique actionneur (48) relie les première et deuxième parties (20, 22) et présente une première plage de fonctionnement durant laquelle le parallélogramme déformable est déformé ainsi qu'une deuxième plage de fonctionnement durant laquelle l'outil (24) pivote autour de l'axe de pivotement (A30).

2. Support d'outil (10) selon la revendication précédente, **caractérisé en ce que** le support d'outil (10) comprend au moins une butée de blocage de la première articulation (62) configurée pour bloquer la déformation de la première articulation (28) sur la deuxième plage de fonctionnement ainsi qu'au moins une butée de blocage de la deuxième articulation (64) configurée pour bloquer la deuxième articulation (30) sur la première plage de fonctionnement.

3. Support d'outil (10) selon la revendication précédente, **caractérisé en ce que** le support d'outil (10) comprend une première butée de blocage de la première articulation (62), dans un premier sens, configurée pour bloquer la déformation de la première articulation (28) dans le premier sens, une première butée de blocage de la deuxième articulation (64), dans un premier sens, configurée pour bloquer la déformation de la deuxième articulation (30) dans le premier sens, ainsi qu'un jeu de première et deuxième cames (66, 68) présentant des profils configurés pour :
- sur la première plage de fonctionnement de l'actionneur (48), bloquer la déformation de la deuxième articulation (30) dans un deuxième sens opposé au premier sens, lorsque l'outil (24) est dans une position entre les positions engagée et dégagée,
- sur la deuxième plage de fonctionnement de l'actionneur (48), bloquer la déformation de la première articulation (28) dans un deuxième sens opposé au premier sens, lorsque l'outil (24) est dans une position entre les positions dégagée et pivotée.

4. Support d'outil (10) selon la revendication précédente, **caractérisé en ce que** la première articulation (28) est un parallélogramme déformable comportant des première et deuxième biellettes (32, 34) reliées à la partie intermédiaire (26) par des axes de pivotement (32.2, 34.2) ; **en ce que** la première came (66) comprend un chant comportant un premier tronçon convexe (66.1), en arc de cercle, centré sur l'axe de pivotement (32.2, 34.2) d'une des première et deuxième biellettes (32, 34) ainsi qu'un deuxième tronçon (66.2) concave, en arc de cercle, centré sur l'axe de pivotement (A30) lorsque l'outil (24) est dans une position entre les positions dégagée et pivotée, et **en ce que** la deuxième came (68) comprend un chant comportant un premier tronçon (68.1) convexe, en arc de cercle, centré sur l'axe de pivotement (A30), coulissant contre le deuxième tronçon (66.2) concave de la première came (66) sur la deuxième plage de fonctionnement de l'actionneur (48) lorsque l'outil (24) est dans une position entre les positions dégagée et pivotée ainsi qu'un deuxième tronçon (68.2) concave, en arc de cercle, centré sur l'axe de pivotement (32.2, 34.2) d'une des première et deuxième biellettes (32, 34), coulissant contre le premier tronçon (66.1) convexe de la première came (66) sur la première plage de fonctionnement de l'actionneur (48) lorsque l'outil (24) est dans une position entre les positions engagée et dégagée.

5. Support d'outil (10) selon la revendication précédente, **caractérisé en ce que** la première came (66) est solidaire de la première biellette (32) et **en ce que** la deuxième came (68) est solidaire de la deuxième partie (22).

6. Support d'outil (10) selon la revendication précédente, **caractérisé en ce que** la première butée de blocage de la première articulation (62) comprend une forme en saillie solidaire de la première partie (20), positionnée entre les première et deuxième biellettes (32, 34) de manière à ce que la première biellette (32) soit en contact contre la butée de blocage de la première articulation (62) lorsque l'outil (24) est dans la position dégagée.

7. Support d'outil (10) selon l'une des revendications précédentes, **caractérisé en ce que** l'actionneur (48) est un vérin (50) reliant les première et deuxième parties (20, 22).

8. Support d'outil (10) selon la revendication précédente, **caractérisé en ce que** le vérin (50) présente une course entre des positions sortie et rentrée qui comprend une première plage de fonctionnement, s'étendant entre la position sortie et une position intermédiaire, sur laquelle le vérin (50) provoque la déformation du parallélogramme déformable et le passage de la position engagée à la position dégagée ou inversement ainsi qu'une deuxième plage de fonctionnement, s'étendant entre la position intermédiaire et la position rentrée, sur laquelle le vérin (50) provoque un pivotement autour de l'axe de pivotement (A30) et le passage de la position dégagée à la position pivotée ou inversement.

9. Machine agricole comportant au moins un support d'outil selon l'une des revendications précédentes.

## Patentansprüche

1. Werkzeugträger (10) mit einem ersten Teil (20), der so eingerichtet ist, dass er unmittelbar oder mittelbar mit einer motorisierten Maschine verbunden werden kann, einem zweiten Teil (22), der ein Werkzeug (24) trägt, wobei der Werkzeugträger (10) ein Zwischenteil (26), ein erstes Gelenk (28), das den ersten Teil (20) und das Zwischenteil (26) verbindet, und ein zweites Gelenk (30) umfasst, das den zweiten Teil (22) und das Zwischenteil (26) verbindet, wobei das erste oder zweite Gelenk (28, 30) ein verformbares Parallelogramm ist, das es dem Werkzeug (24) ermöglicht, sich in einer parallel zum Boden verlaufenden Bewegungsebene zwischen einer ausgerückten und einer eingerückten Stellung zu bewegen, und das andere Gelenk eine Schwenkverbindung ist, die es dem Werkzeug (24) ermöglicht, um eine senkrecht zur Bewegungsebene verlaufende Schwenkachse (A30) zwischen der eingerückten Stellung und einer verschwenkten Stellung zu verschwenken, wobei der Werkzeugträger (10) ein einzigen Stellglied (48) umfasst,
**dadurch gekennzeichnet, dass** das einzige Stellglied (48) den ersten und den zweiten Teil (20, 22) verbindet und einen ersten Betriebszustand, in dem das verformbare Parallelogramm verformt wird, sowie einen zweiten Betriebszustand aufweist, in dem das Werkzeug (24) um die Schwenkachse (A30) schwenkt.

2. Werkzeugträger (10) nach dem vorhergehenden Anspruch, **dadurch gekennzeichnet, dass** der Werkzeugträger (10) wenigstens einen Anschlag (62) zur Blockierung des ersten Gelenks aufweist, der so eingerichtet ist, dass er die Verformung des ersten Gelenks (28) im zweiten Betriebszustand blockiert, sowie wenigstens einen Anschlag (64) zur Blockierung des zweiten Gelenks aufweist, der so eingerichtet ist, dass er das zweite Gelenk (30) im ersten Betriebszustand blockiert.

3. Werkzeugträger (10) nach dem vorhergehenden Anspruch, **dadurch gekennzeichnet, dass** der Werkzeugträger (10) einen ersten Anschlag (62) zur Blockierung des ersten Gelenks in eine ersten Richtung aufweist, der so eingerichtet ist, dass er die Verformung des ersten Gelenks (28) in die erste Richtung blockiert, und einen ersten Anschlag (64) zur Blockierung des zweiten Gelenks in eine erste Richtung aufweist, der so eingerichtet ist, dass er die Verformung des zweiten Gelenks (30) in die erste Richtung blockiert, sowie einen Satz von ersten und zweiten Nocken (66, 68) mit Profilen aufweist, die so eingerichtet sind, dass sie:
- im ersten Betriebszustand des Stellglieds (48) die Verformung des zweiten Gelenks (30) in eine zweite, der ersten Richtung entgegengesetzten Richtung blockieren, wenn sich das Werkzeug (24) in einer Position zwischen der ausgerückten und der eingerückten Stellung befindet,
- im zweiten Betriebsbereich des Stellglieds (48) die Verformung des ersten Gelenks (28) in eine zweite, zur ersten Richtung entgegengesetzte Richtung blockieren, wenn sich das Werkzeug (24) in einer Position zwischen der eingerückten und der verschwenkten Stellung befindet.

4. Werkzeugträger (10) nach dem vorhergehenden Anspruch, **dadurch gekennzeichnet, dass** das erste Gelenk (28) ein verformbares Parallelogramm mit einem ersten und einem zweiten Schwingarm (32, 34) ist, die über Schwenkachsen (32.2, 34.2) mit dem Zwischenteil (26) verbunden sind; dass die erste Nocke (66) einen Rand mit einem ersten Abschnitt (66.1) aufweist, der konvex, kreisbogenförmig und auf die Schwenkachse (32.2, 34.2) des ersten oder zweiten Schwingarms (32, 34) zentriert ist, sowie einen zweiten Abschnitt (66.2) aufweist, der konkav, kreisbogenförmig und auf die Schwenkachse (A30) zentriert ist, wenn sich das Werkzeug (24) in einer Position zwischen der eingerückten und der verschwenkten Stellung befindet, und dass die zweite Nocke (68) einen Rand umfasst, der einen ersten Abschnitt (68.1) aufweist, der konvex, kreisbogenförmig und auf die Schwenkachse (A30) zentriert ist und im zweiten Betriebszustands des Stellglieds (48) über den zweiten konkaven Abschnitt (66.2) des ersten Nockens (66) gleitet, wenn sich das Werkzeug (24) in einer Position zwischen der eingerückten und der verschwenkten Stellung befindet, sowie einen zweiten Abschnitt (68.2) aufweist, der konkav, kreisbogenförmig und auf die Schwenkachse (32.2, 34.2) des ersten oder zweiten Schwingarms (32, 34) zentriert ist und im ersten Betriebszustand des Stellglieds(48) über den ersten konvexen Abschnitt (66.1) der ersten Nocke (66) gleitet, wenn sich das Werkzeug (24) in einer Position zwischen der ausgerückten und der eingerückten Stellung befindet.

5. Werkzeugträger (10) nach dem vorhergehenden Anspruch, **dadurch gekennzeichnet, dass** die erste Nocke (66) fest mit dem ersten Schwingarm (32) verbunden ist und dass die zweite Nocke (68) fest mit dem zweiten Teil (22) verbunden ist.

6. Werkzeugträger (10) nach dem vorhergehenden Anspruch, **dadurch gekennzeichnet, dass** der erste Anschlag (62) zum Blockieren des ersten Gelenks eine vorstehende Form aufweist, die mit dem ersten Teil (20) fest verbunden ist und zwischen dem ersten und dem zweiten Schwingarm (32, 34) angeordnet ist, so dass der erste Schwingarm (32) gegen den Anschlag (62) zum Blockieren des ersten Gelenks anliegt, wenn sich das Werkzeug (24) in der ausgerückten Stellung befindet.

7. Werkzeugträger (10) nach einem der vorhergehenden Ansprüche, **dadurch gekennzeichnet, dass** das Stellglied (48) ein Zylinder (50) ist, der den ersten und den zweiten Teil (20, 22) verbindet.

8. Werkzeugträger (10) nach dem vorhergehenden Anspruch, **dadurch gekennzeichnet, dass** der Zylinder (50) einen Hub zwischen einer ausgefahrenen und einer eingefahrenen Position aufweist, der einen ersten Betriebszustand umfasst, der sich zwischen der ausgefahrenen Position und einer Zwischenposition erstreckt und in dem der Zylinder (50) die Verformung des verformbaren Parallelogramms und den Übergang von der ausgerückten Stellung in die eingerückte Stellung oder umgekehrt bewirkt, sowie einen zweiten Betriebsbereich umfasst, der sich zwischen der Zwischenposition und der eingefahrenen Position erstreckt, in dem der Zylinder (50) ein Schwenken um die Schwenkachse (A30) und den Übergang von der eingerückten Stellung in die verschwenkte Stellung oder umgekehrt bewirkt.

9. Landmaschine mit wenigstens einem Geräteträger nach einem der vorhergehenden Ansprüche.

## Claims

1. Tool support (10) comprising a first part (20) configured to be connected directly or indirectly to a motorised vehicle, a second part (22) supporting a tool (24), the tool support (10) comprising an intermediate part (26),
a first articulation (28) connecting the first part (20) and the intermediate part (26), a second articulation (30) connecting the second part (22) and the intermediate part (26), one of the first and second articulations (28, 30) being a deformable parallelogram allowing the tool (24) to move in a plane of movement parallel to the ground between engaged and clear positions and the other being a pivoting connection allowing the tool (24) to pivot about an axis of pivoting (A30) perpendicular to the plane of movement between clear and pivoted positions, the tool support (10) comprising a single actuator (48),
**characterized in that** said single actuator (48) connects the first and second parts (20, 22) and has a first range of operation during which the deformable parallelogram is deformed, and a second range of operation during which the tool (24) pivots about the axis of pivoting (A30).

2. Tool support (10) according to the preceding claim, **characterized in that** the tool support (10) comprises at least one end stop for immobilizing the first articulation (62) and configured to block the deformation of the first articulation (28) over the second range of operation, and at least one end stop for immobilizing the second articulation (64) and configured to block the second articulation (30) over the first range of operation.

3. Tool support (10) according to the preceding claim, **characterized in that** the tool support (10) comprises a first end stop for immobilizing the first articulation (62) in a first direction and configured to block the deformation of the first articulation (28) in the first direction, a first end stop for immobilizing the second articulation (64) in a first direction and configured to block the deformation of the second articulation (30) in the first direction, and a set of a first and a second cam (66, 68) having profiles configured to:
- over the first range of operation of the actuator (48), block the deformation of the second articulation (30) in a second direction opposite to the first direction, when the tool (24) is in a position between the engaged and clear positions,
- over the second range of operation of the actuator (48), block the deformation of the first articulation (28) in a second direction opposite to the first direction when the tool (24) is in a position between the clear and pivoted positions.

4. Tool support (10) according to the preceding claim, **characterized in that** the first articulation (28) is a deformable parallelogram comprising first and second link rods (32, 34) connected to the intermediate part (26) by pivot pins (32.2, 34.2); **in that** the first cam (66) has an edge comprising a convex first portion (66.1) in the form of an arc of a circle centred on the pivot pin (32.2, 34.2) of one of the first and second link rods (32, 34) and a concave second portion (66.2) in the form of an arc of a circle centred on the axis of pivoting (A30) when the tool (24) is in a position between the clear and pivoted positions, and **in that** the second cam (68) has an edge comprising a convex first portion (68.1) in the form of an arc of a circle centred on the axis of pivoting (A30) and sliding against the concave second portion (66.2) of the first cam (66) over the second range of operation of the actuator (48) when the tool (24) is in a position between the clear and pivoted positions, and a concave second portion (68.2) in the form of an arc of a circle centred on the pivot pin (32.2, 34.2) of one of the first and second link rods (32, 34) and sliding against the convex first portion (66.1) of the first cam (66) over the first range of operation of the actuator (48) when the tool (24) is in a position between the engaged and clear positions.

5. Tool support (10) according to the preceding claim, **characterized in that** the first cam (66) is secured to the first link rod (32) and **in that** the second cam (68) is secured to the second part (22).

6. Tool support (10) according to the preceding claim, **characterized in that** the first end stop for immobilizing the first articulation (62) comprises a projecting shape secured to the first part (20) and positioned between the first and second link rods (32, 34) so that the first link rod (32) is in contact with the end stop that immobilizes the first articulation (62) when the tool (24) is in the clear position.

7. Tool support (10) according to one of the preceding claims, **characterized in that** the actuator (48) is a ram (50) connecting the first and second parts (20, 22) .

8. Tool support (10) according to the preceding claim, **characterized in that** the ram (50) has a travel, between deployed and retracted positions, which comprises a first range of operation extending between the deployed position and an intermediate position and over which the ram (50) causes the deformable parallelogram to deform and transition from the engaged position to the clear position or vice versa, and a second range of operation extending between the intermediate position and the retracted position and over which the ram (50) causes pivoting about the axis of pivoting (A30) and transition from the clear position to the pivoted position or vice versa.

9. Agricultural machine comprising at least one tool support according to one of the preceding claims.
